(19) Europäisches Patentamt
European Patent Office
Office européen des brevets

(11) **EP 4 589 680 A2**

(12) **EUROPEAN PATENT APPLICATION**

(43) Date of publication:
**23.07.2025 Bulletin 2025/30**

(21) Application number: **25174605.3**

(22) Date of filing: **06.05.2025**

(51) International Patent Classification (IPC):
*H01M 4/134* [(2010.01)]    *H01M 4/36* [(2006.01)]
*H01M 4/38* [(2006.01)]    *H01M 4/587* [(2010.01)]
*H01M 4/62* [(2006.01)]    *H01M 10/0525* [(2010.01)]

(52) Cooperative Patent Classification (CPC):
**H01M 4/366; H01M 4/134; H01M 4/386;**
**H01M 4/587; H01M 4/625;** H01M 10/0525;
Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **30.09.2024 CN 202411384597**

(71) Applicant: **BTR New Material Group Co., Ltd.**
**Shenzhen, Guangdong 518106 (CN)**

(72) Inventors:
• **XIONG, Jiangzhi**
**Shenzhen, 518106 (CN)**
• **HE, Peng**
**Shenzhen, 518106 (CN)**
• **XIAO, Chengmao**
**Shenzhen, 518106 (CN)**
• **REN, Jianguo**
**Shenzhen, 518106 (CN)**
• **HE, Xueqin**
**Shenzhen, 518106 (CN)**

(74) Representative: **Studio Torta S.p.A.**
**Via Viotti, 9**
**10121 Torino (IT)**

(54) **ANODE MATERIAL, ANODE SHEET, AND SECONDARY BATTERY**

(57) Provided are anode material, anode sheet, and secondary battery. The anode material includes a core body and a carbon coating layer coating at least partial surface of the core body. The core body includes a matrix and an active substance. The matrix has pores, and at least partial active substance is provided in the pores of the matrix. The anode material is tested through infrared spectroscopic analysis. An area of a stretching vibration peak at a wave number of $2896\pm10$ cm$^{-1}$ is $S_1$; a sum of areas of stretching vibration peaks at wave numbers of $2924\pm10$ cm$^{-1}$ and $2853\pm10$ cm$^{-1}$ is $S_2$; an area of a stretching vibration peak at a wave number of $2960\pm10$ cm$^{-1}$ is $S_3$; and the $S_1$, the $S_2$, and the $S_3$ meet:

$$0.1 \leq \frac{3S_3}{S_1+2S_2+3S_3} \leq 0.5$$

. Based on the anode material, the anode sheet and the secondary battery have good electrochemical performance.

FIG.1

**EP 4 589 680 A2**

**Description**

**Technical Field**

The present disclosure relates to the field of electrochemical energy storage, and specifically, to anode material, anode sheet, and secondary battery.

**Background**

With the rapid development of the emerging field of new energy vehicles, smart homes, Internet of Things, etc., requirements for the performance of batteries increase day by day. A conventional graphite anode material has the advantages of being high in efficiency, stable in charging and discharging platform, etc. However, a low gram capacity impedes the further application of graphite in high demand fields. Compared with the graphite, a silicon material has a large theoretical specific capacity, and has the potential of serving as an anode material. However, the silicon anode material has the problems of being low in conductive performance, large in changes in circulation volume, etc., limiting the performance of the silicon anode material in practical applications.

The volume expansion of silicon may be inhibited and a conductive capacity may be improved by compounding the silicon and a porous carbon material. However, silicon particles are generally exposed from a surface of the porous carbon material during the compounding of the silicon and the porous carbon material, and during subsequent water-based homogenate and battery cycling, the silicon particles on the surface are in contact with water in a slurry, as well as an electrolyte solution, causing a gas production behavior. Furthermore, the silicon particles on the surface lack a synergistic effect of a skeleton and a coating layer, which are easy to shed, affecting the cycle life of batteries.

**Summary**

In view of this, the present disclosure provides anode material, anode sheet, and secondary battery, so as to solve at least one of the above problems.

In order to implement the above objective, the present disclosure provides an anode material, including a core body and a carbon coating layer coating at least partial surface of the core body. The core body includes a matrix and an active substance. The matrix has pores, and at least partial active substance is provided in the pores of the matrix. The anode material is tested through infrared spectroscopic analysis. An area of a stretching vibration peak at a wave number of $2896\pm10$ cm$^{-1}$ is S$_1$; a sum of areas of stretching vibration peaks at wave numbers of $2924\pm10$ cm$^{-1}$ and $2853\pm10$ cm$^{-1}$ is S$_2$; an area of a stretching vibration peak at a wave number of $2960\pm10$ cm$^{-1}$ is S3; and S$_1$, S$_2$, and S$_3$ meet:

$$0.1 \leq \frac{3S_3}{S_1+2S_2+3S_3} \leq 0.5$$

.

In some possible implementations, a specific surface area of the matrix is 500 m$^2$/g to 2000 m$^2$/g.

In some possible implementations, a total pore volume of the matrix is 0.5 cm$^3$/g to 2.0 cm$^3$/g.

In some possible implementations, an average pore diameter of the matrix is 0.1 nm to 8 nm.

In some possible implementations, an average particle size of the active substance is 0.1 nm to 100 nm.

In some possible implementations, a thickness of the carbon coating layer is 0.1 nm to 2000 nm.

In some possible implementations, a specific surface area of the anode material is 1 m$^2$/g to 10 m$^2$/g.

In some possible implementations, powder conductivity of the anode material is 0.05 S/m to 5 S/m.

In some possible implementations, a median particle size D$_V$50 of the anode material is 3 $\mu$m to 15 $\mu$m.

In some possible implementations, the matrix includes a carbon material. The carbon material includes one or more of artificial graphite, natural graphite, amorphous carbon, activated carbon, mesocarbon microbeads, carbon nanotubes, carbon nanofibers, and graphene.

In some possible implementations, the matrix includes a non-carbon material. The non-carbon material includes at least one of a metal oxide, a silicide, a silicate, a phosphate, a titanate, or an aluminum borate salt; the metal oxide includes one or more of aluminum oxide, zirconium oxide, germanium dioxide, and manganese dioxide; the silicide includes one or more of silicon carbide and silicon nitride; the silicate includes one or more of cordierite, mullite, and zeolite; the phosphate includes one or more of aluminum phosphate, magnesium phosphate, calcium phosphate, titanium phosphate, chromic phosphate, cobalt phosphate, nickel phosphate, germanium phosphate, zirconium phosphate, niobium phosphate, molybdenum phosphate, tantalum phosphate, tungsten phosphate, and lanthanum phosphate; and the titanate includes one or more of calcium titanate, iron titanate, lithium titanate, and barium titanate.

In some possible implementations, the active substance includes one or more of Si, Li, Na, K, Sn, Ge, Fe, Mg, Ti, Zn, Al, P, and Cu.

In some possible implementations, a carbon material of the carbon coating layer includes one or more of amorphous carbon and graphitized carbon.

In some possible implementations, the matrix includes a carbon matrix, the active substance includes a silicon material, the silicon material includes one or more of elemental silicon, a silicon oxide, and a silicon alloy, and based on the mass of the anode material, a mass proportion of carbon in the anode material is 30% to 70%.

In some possible implementations, based on the mass of the anode material, a mass proportion of hydrogen in the anode material is less than or equal to 5%.

In some possible implementations, based on the mass of the anode material, a mass proportion of silicon in the anode material is 30% to 80%.

The present disclosure further provides an anode sheet, including an anode current collector and an anode active material layer disposed on the anode current collector. The anode active material layer includes the anode material.

In some possible implementations, the anode active material layer further includes a binder. The binder is selected from any one or more of poly(vinyl alcohol), hydroxypropyl cellulose, diacetyl cellulose, polyvinyl chloride, carboxylated polyvinyl chloride, poly(vinyl fluoride), poly(tetrafluoroethylene), polyvinylidene fluoride, polyethylene, polypropylene, styrene butadiene rubber, acrylated (ester) styrene butadiene rubber, polymer containing ethylene oxide, polyvinylpyrrolidone, polyurethane, epoxy resin, and nylon.

In some possible implementations, the anode active material layer further includes a conductive material, and the conductive material is selected from any one or more of a carbon-based material, a metal-based material, and a conductive polymer.

In some possible implementations, the carbon-based material is selected from any one or more of natural graphite, artificial graphite, carbon black, acetylene black, Ketjen black, and carbon fiber.

In some possible implementations, the metal-based material is a metal powder or a metal fiber, and/or the metal-based material is selected from any one of more of copper, nickel, aluminum, and silver.

In some possible implementations, the conductive polymer is a polyphenylene derivative.

The present disclosure further provides a secondary battery, including the above anode sheet.

In the present disclosure, the anode material is tested through infrared spectroscopic analysis, the area of the stretching vibration peak at the wave number of $2896\pm10$ cm$^{-1}$ is $S_1$; the sum of the areas of the stretching vibration peaks at the wave numbers of $2924\pm10$ cm$^{-1}$ and $2853\pm10$ cm$^{-1}$ is $S_2$; the area of the stretching vibration peak at the wave number of $2960\pm10$ cm$^{-1}$ is $S_3$; and the $S_1$, the $S_2$, and the $S_3$ meet: $0.1 \leq \dfrac{3S_3}{S_1+2S_2+3S_3} \leq 0.5$. According to the rational speculation of the inventors, the stretching vibration peak at the wave number of $2896\pm10$ cm$^{-1}$ is a stretching vibration peak of -CH, the stretching vibration peaks at the wave numbers of $2924\pm10$ cm$^{-1}$ and $2853\pm10$ cm$^{-1}$ are stretching vibration peaks of -CH$_2$, and the stretching vibration peak at the wave number of $2960\pm10$ cm$^{-1}$ is a stretching vibration peak of -CH$_3$. By providing methyl, methylene, and methine on the carbon coating layer of the anode material, the methyl is conductive to improving the stability of the anode material and adjusting the infiltration of the anode material in a water-based slurry, and the methylene and the methine are conductive to causing the anode material to have more electronic transport paths. Through infrared spectroscopic analysis testing, the areas $S_3$, $S_2$, and $S_1$ of the stretching vibration peaks of the methyl, methylene, and methine meet $0.1 \leq \dfrac{3S_3}{S_1+2S_2+3S_3} \leq 0.5$. In an aspect, the gas production behavior of the active substance in the anode material can be reduced, and an expansion volume effect of the anode material is relieved, such that the cycling stability of the obtained secondary battery is improved. In another aspect, the conductivity of the material can be improved, such that the electron conductivity of the anode sheet is maintained or improved, facilitating the rapid transmission of electrons in the secondary battery to adapt a rapid charging and discharging process, and achieving a high specific capacity.

## Brief Description of the Drawings

Fig. 1 is a schematic structural diagram of a secondary battery during charging according to an implementation of the present disclosure.

Fig. 2 is a schematic structural diagram of a secondary battery during discharging according to an implementation of the present disclosure.

Fig. 3 is a Gaussian fitting result diagram of an infrared spectrogram of an anode material according to an implementation of the present disclosure.

In the drawings:

Electrode assembly: 100;

Cathode sheet: 101;

Anode sheet: 102;

Separation film: 103.

**Detailed Description of the Embodiments**

Embodiments of the present disclosure are described below in detail. The embodiments described below with reference to the drawings are exemplary and are merely used to explain the present disclosure, but should not be construed as a limitation on the present disclosure. It is to be noted that, unless otherwise defined, all technical and scientific terms as used herein have the same meanings as those commonly understood by those skilled in the technical field of the present disclosure. The implementations in the present disclosure and the features in the implementations may be combined with one another without conflict. Many specific details are set forth in the following description to facilitate a full understanding of the present disclosure, the described implementations are only part of the implementations of the present disclosure and not all of the implementations.

An implementation of the present disclosure provides a secondary battery, including a housing, an electrode assembly, and an electrolyte. The electrode assembly and an electrolyte solution are both located inside the housing.

The housing may be a packaging bag that is packaged by using a packaging film (e.g., aluminum plastic film), for example, a soft pack battery, which may, in some other embodiments, also be a steel shell battery, an aluminum shell battery, etc.

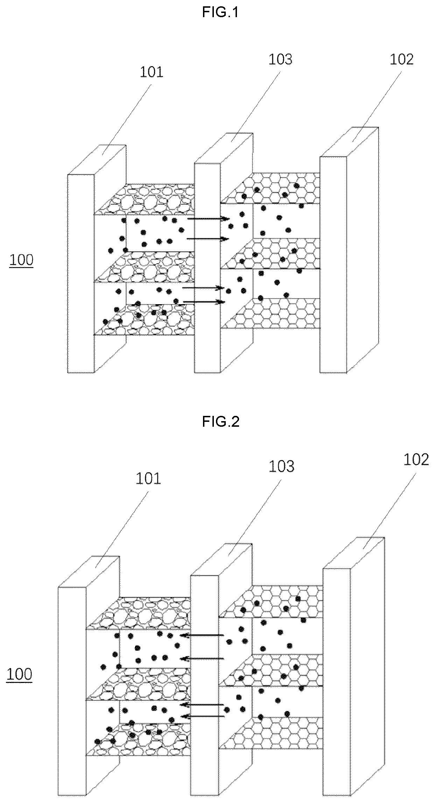

Referring to Fig. 1 and Fig. 2, the electrode assembly 100 includes a cathode sheet 101, an anode sheet 102, and a separation film 103. The separation film 103 is disposed between the cathode sheet 101 and the anode sheet 102. When the electrolyte solution (not shown in the figure) is provided, during charging, referring to Fig. 1, active ions (e.g., lithium ions) are de-embedded from lattices of a cathode material (e.g., lithiated intercalation compound) of the cathode sheet 101, pass through the separation film 103 via the electrolyte solution, arrive at the anode sheet 102, and are inserted into lattices of the anode material. During discharging, referring to Fig. 2, the active ions (e.g., lithium ions) are de-intercalated from the lattices of the anode material of the anode sheet 102, pass through the separation film 103 via the electrolyte solution, arrive at the cathode sheet 101 and are embedded into the lattices of the cathode material (e.g., lithiated intercalation compound). The generated electrons arrive at the cathode sheet 101 via an external circuit from the anode sheet 102. A reverse motion of the electrons forms a current, which may be used by an electrical appliance.

In some embodiments, the electrode assembly 100 may be of a laminated structure, which is formed by sequentially alternately stacking the cathode sheet 101, the separation film 103, and the anode sheet 102. In some other embodiments, the electrode assembly 100 may also be of a winding structure, which is formed by first sequentially stacking and then winding the cathode sheet 101, the separation film 103, and the anode sheet 102.

Cathode sheet

The cathode sheet 101 includes a cathode current collector and a cathode material active layer disposed on at least one surface of the cathode current collector. The cathode current collector may use aluminum foil, nickel foil, or the like, or may be a composite current collector disclosed in any related art, for example, but not limited to, a current collector that is formed by combining conductive foil and a polymer substrate. The cathode material active layer includes a cathode active material, and the cathode active material includes a compound (i.e., lithiated intercalation compound) in which the lithium ions may be reversibly embedded and de-embedded. In some embodiments, the cathode active material may include a lithium transition metal composite oxide. The lithium transition metal composite oxide contains lithium and at least one element selected from cobalt, manganese, and nickel. In some embodiments, the cathode active material may include, but is not limited to, at least one of lithium cobalt oxide ($LiCoO_2$), a lithium-nickel-manganese-cobalt ternary material (NCM), lithium manganate ($LiMn_2O_4$), lithium nickel manganese oxide ($LiNi_{0.5}Mn_{1.5}O_4$), or lithium iron phosphate ($LiFePO_4$).

The cathode material active layer further includes a binder, which is used to bond to cathode active material particles, such that a film layer is formed, and a bonding force between the cathode material active layer and the cathode current collector can also be improved. In some embodiments, the binder may include, but is not limited to, at least one of poly(vinyl alcohol), hydroxypropyl cellulose, diacetyl cellulose, polyvinyl chloride, carboxylated polyvinyl chloride, poly(vinyl fluoride), polymer containing ethylene oxide, polyvinylpyrrolidone, polyurethane, poly(tetrafluoroethylene), polyvinylidene fluoride, polyethylene, polypropylene, styrene butadiene rubber, acrylated (ester) styrene butadiene rubber, epoxy resin, or nylon.

The cathode material active layer may further include a conductive material. The conductive material includes, but is not limited to, a carbon-based material, a metal-based material, a conductive polymer, or any combination thereof. In some embodiments, the carbon-based material may include, but is not limited to, natural graphite, artificial graphite, carbon black, acetylene black, Ketjen black, carbon fiber, or any combination thereof. In some embodiments, the metal-based material may include, but is not limited to, a metal powder or a metal fiber, for example, copper, nickel, aluminum, or silver. In some embodiments, the conductive polymer may be a polyphenylene derivative.

Anode sheet

The anode sheet 102 includes an anode current collector and an anode active material layer disposed on at least one surface of the anode current collector. The anode current collector may use at least one of copper foil, nickel foil, stainless steel foil, titanium foil, or a carbon-based current collector, or may be a composite current collector disclosed in any related art, for example, but not limited to, a current collector that is formed by combining conductive foil and a polymer substrate. The anode active material layer includes an anode material.

The anode material includes a core body and a carbon coating layer coating at least partial surface of the core body. The core body includes a matrix and an active substance. The matrix has pores, and at least partial active substance is provided in the pores of the matrix. The anode material is tested through infrared spectroscopic analysis. An area of a stretching vibration peak at a wave number of $2896 \pm 10$ cm$^{-1}$ is $S_1$; a sum of areas of stretching vibration peaks at wave numbers of $2924 \pm 10$ cm$^{-1}$ and $2853 \pm 10$ cm$^{-1}$ is $S_2$; an area of a stretching vibration peak at a wave number of $2960 \pm 10$ cm$^{-1}$ is $S_3$; and the $S_1$, the $S_2$, and the $S_3$ meet: 

$$0.1 \leq \frac{3S_3}{S_1 + 2S_2 + 3S_3} \leq 0.5$$

.

According to the rational speculation of the inventors, the stretching vibration peak at the wave number of $2896 \pm 10$ cm$^{-1}$ is a stretching vibration peak of -CH, the stretching vibration peaks at the wave numbers of $2924 \pm 10$ cm$^{-1}$ and $2853 \pm 10$ cm$^{-1}$ are stretching vibration peaks of -CH$_2$, and the stretching vibration peak at the wave number of $2960 \pm 10$ cm$^{-1}$ is a stretching vibration peak of -CH$_3$.

The anode material of the present disclosure has the carbon coating layer, and the carbon coating layer is provided with methyl. The methyl is an electron-donating group, and its carbon atom has relatively high electronegativity compared to a hydrogen atom, such that an electron cloud in the methyl biases its carbon atom, thereby causing the carbon atom of the methyl to be partially negatively charged. When the methyl participates in the formation of a carbon chain, such negative charge effect is passed along the carbon chain, such that the density of the electron cloud on the carbon atom connected to the methyl is increased, and the density of the electron cloud on the carbon atom away from the methyl is relatively reduced. Therefore, dynamic electron cloud density and charge distribution are shown on the carbon chain, facilitating the relieving of a local charge concentration phenomenon on the carbon chain, thereby reducing the tension and energy instability inside a molecule. Furthermore, a $\sigma$ electron of a C-H bond in the methyl may be overlapped with a $\pi$ electron of an unsaturated bond on a neighboring carbon chain, so as to form a hyperconjugation effect, thereby reducing internal energy, and causing the entire molecule to be more stable. Moreover, the methyl is a nonpolar group, which does not facilitate the formation of a hydrogen bond, and has certain hydrophobicity. An anode slurry system (an anode material active substance, a conductive agent, a binder, etc.) generally uses water as a solvent to form water-based slurry. The hydrophobicity of the methyl can adjust the wettability and dispersivity of the anode material in the water-based slurry. When the methyl coats the active substance (e.g., silicon particle) attached to a surface of the matrix, the risk of side reactions (e.g., gas production of the silicon particle) of the active substance in the water-based slurry is reduced. The carbon coating layer of the present disclosure further includes methylene and methine. Both of the methylene and methine have relatively-higher reaction activity compared to the methyl. Different reaction activity may change a molecular structure of a material or an electronic transport path in some chemical reactions. The high reaction activity of the methylene and methine can provide more flow paths for the electrons of the anode material, thereby facilitating improvement of the conductivity of the anode material.

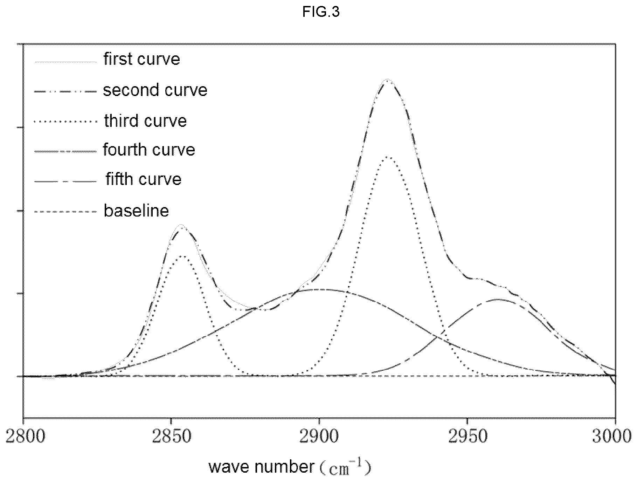

In the present disclosure, a relationship among peak areas of stretching vibration peaks of the methyl (-CH$_3$), the methylene (-CH$_2$), and the methine (-CH) under an infrared spectroscopic test is further limited. The relationship may represent a content relationship of the methyl, the methylene, and the methine on the carbon coating layer. Specifically, the infrared spectroscopic test is based on transition of vibration and rotational energy levels when the molecule absorbs infrared light with a specific wavelength. The vibration energy level transition of the molecule refers to a relative motion of each atom in the molecule near an equilibrium position. These vibration modes include normal vibration (e.g., stretching vibration and variable angle vibration) and deformation vibration. During vibration, if a dipole moment of the molecule changes, the molecule absorbs the infrared light with a specific frequency, thereby generating vibration transition. The areas $S_1$, $S_2$, and $S_3$ of the stretching vibration peaks of the methine (-CH), the methylene (-CH$_2$), and the methyl (-CH$_3$) may be obtained by performing Gaussian fitting on an infrared spectrogram of the anode material. Referring to Fig. 3, there is a stretching vibration peak of the -CH at the wave number of $2896 \pm 10$ cm$^{-1}$, there are stretching vibration peaks of the -CH$_2$ at the wave numbers of $2924 \pm 10$ cm$^{-1}$ and $2853 \pm 10$ cm$^{-1}$, and there is a stretching vibration peak of the -CH$_3$ at the

wave number of $2960 \pm 10$ cm$^{-1}$. The area of the stretching vibration peak of the -CH in the anode material is S$_1$, a sum of the areas of the stretching vibration peaks of the -CH$_2$ is S$_2$, and the area of the stretching vibration peak of the -CH$_3$ is S$_3$. $3S_3$ represents a content of an H atom (methyl hydrogen) from the -CH$_3$; $2S_2$ represents a content of an H atom (methylene hydrogen) from the -CH$_2$; and $S_1$ represents a content of an H atom (methine hydrogen) from the -CH. In this case, a formula $\dfrac{3S_3}{S_1+2S_2+3S_3}$ represents a proportion of the methyl hydrogen in a total sum of the methyl hydrogen, the methylene hydrogen, and the methine. In the present disclosure, it is found that, when the formula meets a numerical rang, that is, $0.1 \leq \dfrac{3S_3}{S_1+2S_2+3S_3} \leq 0.5$, the structure stability and hydrophobicity of the methyl are achieved, and the reaction activity of the methylene or the methine is achieved. In an aspect, a gas production behavior of the active substance in the anode material can be reduced, and an expansion volume effect of the anode material is relieved, such that the cycling stability of the obtained secondary battery is improved. In another aspect, the conductivity of the material can be improved, such that the electron conductivity of an anode sheet prepared by the anode material is maintained or improved, facilitating the rapid transmission of electrons in the secondary battery to adapt a rapid charging and discharging process, and achieving a high specific capacity. In generally, the anode material reaches a better equilibrium point between the stability and conductivity.

It is to be noted that, when the formula $\dfrac{3S_3}{S_1+2S_2+3S_3}$ is greater than an upper limit value, it indicates that excessive methyl is provided on the coating layer, or the content of the methylene or the methine is too low. It may be understood that, excessive methyl increases steric hindrance of the matrix (e.g., carbon matrix) coated, such that the proximity and reaction of other functional groups or molecules are affected, and electronic circulation paths are reduced, leading to a risk of reduction in the overall conductivity of the anode material, which does not facilitate the reaction activity of the anode material, thus affecting the conductivity, and resulting in a reduction in the capacity and Initial Coulombic Efficiency (ICE) of a battery prepared by the anode material. When the formula $\dfrac{3S_3}{S_1+2S_2+3S_3}$ is less than a lower limit value, it indicates that the content of the methyl on the coating layer is relatively low, or the content of the methylene or methine is too high. Too little methyl reduces the contribution of the methyl to the stability of a carbon material, not facilitating the cycling stability of the anode material. Furthermore, excessive methylene or methine causes too high reaction activity, not facilitating the chemical stability of the anode material, and leading to a reduction in the cycling stability of the battery prepared by the anode material.

In some embodiments, the infrared spectrogram (shown in Fig. 3) of the anode material of the present disclosure and the analysis test for the S$_1$, S$_2$, and S$_3$ are obtained by the following steps.

At Step I, a Thermo Fisher Nicolet iS50 Fourier infrared spectrometer is used for analysis, a wavelength of an infrared light source is 400 cm$^{-1}$ to 4000 cm$^{-1}$, a detector is DTGS KBr, a beam splitter is KBr, a resolution ratio is 2 cm$^{-1}$, and analysis data is obtained.

At Step II, OMNIC software is used to analyze the analysis data, so as to obtain a preliminary peak position of a hydrocarbon group.

At Step III, Origin software is used to analyze a preliminary peak position result to obtain peak positions and peak areas S$_1$, S$_2$, and S$_3$ of the stretching vibration peaks of the methine (-CH), the methylene (-CH$_2$), and the methyl (-CH$_3$).

Referring to Fig. 3, a peak result formed by a first curve relative to a baseline is the preliminary peak position of the hydrocarbon group obtained through the analysis of the OMNIC software; a peak result formed by a third curve relative to the baseline is the peak position of the stretching vibration peak of the methylene (-CH$_2$); a peak result formed by a fourth curve relative to the baseline is the peak position of the stretching vibration peak of the methine (-CH); a peak result formed by a fifth curve relative to the baseline is the peak position of the stretching vibration peak of the methyl (-CH$_3$), and the peak areas are obtained through calculation. A second curve co-occurs during the analysis simultaneously with the third curve, the fourth curve, and the fifth curve after analysis. If a coincidence degree of the second curve and the first curve is higher, it indicates that analysis results of the third curve, fourth curve, and fifth curve are more accurate. In Fig. 3 of the present disclosure, the second curve essentially coincides with the first curve.

In some embodiments, the infrared spectroscopic test may specifically include: 1 mg to 2 mg of a sample is taken and properly ground in an agate mortar, and then is well mixed with a dried potassium bromide powder (about 100 mg, with a particle size of 200 meshes); and the mixture is put in a die, and is pressed into tablets on a tablet press for testing. The Thermo Fisher Nicolet iS50 Fourier infrared spectrometer is used for analysis, the light source used is the infrared light source (400 cm$^{-1}$ to 4000 cm$^{-1}$), the detector is the DTGS KBr, the beam splitter is KBr, the resolution ratio is 2 cm$^{-1}$, then sampling is performed, and the test is completed. The OMNIC software is used to preliminarily determine related peak positions. The obtained peak position results are fitted through the Origin software. A fitting process includes: infrared test data processed by the OMNIC is imported in the Origin for plotting, in an Origin menu bar, analysis, peak value and baseline, and peak value analysis are clicked in sequence, after a dialog box is opened, "peak fitting" is selected in a pop-up window, "user defined" is selected in a baseline mode, "enable automatic search" is unchecked, "clear all" is selected for the number of points to be found, then addition is clicked for manual addition, after addition is clicked, double-clicking is performed to add points on two ends of the a curve, a completion button in an upper left corner is clicked after addition is completed, next is clicked, "interpolation" is selected for a connection mode, "spline curve" is selected for an interpolation mode, the points are connected in the form of the curve, then next is clicked again, "automatically subtract baseline" is selected, the baseline is leveled, next is clicked, "allow automatic search" is unchecked, "addition" is selected, according to a peak position in the OMNIC software, double-clicking is performed to obtain the points in a position on the curve where a peak is expected, next is clicked, automatically generated peaks (similar to the third curve, fourth curve, and fifth curve in Fig. 3) may be seen, fitting control is clicked, a peak (similar to the second curve in Fig. 3) close to an imported peak may be seen, "1 iteration" is clicked, clicking is performed repeatedly, the "automatically generated peaks" during iteration are automatically adjusted to cause a matching degree of the "peak close to the imported peak" and the imported peak to be higher, until "fitting convergence" displays, when a curve (the second curve in Fig. 3) obtained after fitting convergence has a higher coincidence degree with raw data (the first curve in Fig. 3), a fitting effect is greater, and completion is clicked to obtain a fitting curve and fitting data, that is, the peak positions (which respectively correspond to the fourth curve, the third curve, and the fifth curve) and peak areas $S_1$, $S_2$, $S_3$ of the stretching vibration peaks of the methine (-CH), the methylene (-CH$_2$), and the methyl (-CH$_3$) are obtained.

In some embodiments, a specific surface area of the matrix is 500 m$^2$/g to 2000 m$^2$/g. For example, the specific surface area of the matrix may be 500 m$^2$/g, 600 m$^2$/g, 800 m$^2$/g, 1000 m$^2$/g, 1200 m$^2$/g, 1400 m$^2$/g, 1600 m$^2$/g, 1800 m$^2$/g, 2000 m$^2$/g, or any value within a range composed of any two of the above numerical values. By controlling the specific surface area of the matrix within the above range, the active substance (e.g., silicon particle) are uniformly dispersed and stably attached to the matrix, such that the risk of the active substance shedding from the matrix is reduced, thereby improving the stability and durability of the active substance.

In some embodiments, a total pore volume of the matrix is 0.5 cm$^3$/g to 2.0 cm$^3$/g. For example, the total pore volume of the matrix may be 0.5 cm$^3$/g, 0.8 cm$^3$/g, 1 cm$^3$/g, 1.2 cm$^3$/g, 1.5 cm$^3$/g, 1.8 cm$^3$/g, 2 cm$^3$/g, or any value within a range composed of any two of the above numerical values. When the matrix has abundant pores, these pores can accommodate the active substance, and reserve spaces for the volume expansion of the accommodated active substance. It may be understood that, when the matrix and the active substance form a composite material, at least partial active substance is deposited in the pores of the matrix, such that a total pore volume of the formed composite material is less than a total pore volume of an initial matrix.

In some embodiments, an average pore diameter of the matrix is 0.1 nm to 8 nm. For example, the average pore diameter of the matrix may be 0.1 nm, 0.5 nm, 1 nm, 2 nm, 3 nm, 4 nm, 5 nm, 6 nm, 7 nm, 8 nm, or any value within a range composed of any two of the above numerical values. By controlling the average pore diameter of the matrix within the above range, it indicates that the pores of the matrix include relatively-more micropores (pores with a pore diameter less than or equal to 2 nm), and further include at least one or more of mesopores (a pore diameter being greater than 2 nm and less than or equal to 50 nm) or macropores (a pore diameter being greater than 50 nm). The micropores in the matrix can reduce aggregation of the active substance in the matrix, such that the content of the active substance in the matrix and a uniformity degree of the distribution of the active substance are increased, thereby improving the specific capacity and mechanical properties of the obtained anode material. The mesopores or macropores with relatively large pore diameters may reserve sufficient buffer spaces for the volume expansion of the active substance, such that the volume expansion of the active substance is effectively relieved, and the risks of the cracking and pulverization of the anode material caused by excessive local expansion stress due to uneven volume changes in the active substance during the cycling of the anode material are reduced, thereby improving the structural stability and cyclic stability of particles of the anode material.

In some embodiments, an average particle size of the active substance is 0.1 nm to 100 nm. For example, the average particle size of the active substance may be 0.1 nm, 0.5 nm, 1 nm, 3 nm, 5 nm, 8 nm, 10 nm, 20 nm, 30 nm, 40 nm, 50nm, 65 nm, 80 nm, 95 nm, 100 nm, or any value within a range composed of any two of the above numerical values. By setting the average particle size of the active substance within the above range, mechanical stress when volume expansion occurs in the active substance (e.g., silicon particle) may be reduced to maintain a good battery capacity for a secondary battery, an irreversible capacity loss is reduced, and electronic and ion transport paths may also be shortened. Furthermore, a size of the active substance is reduced, and a gap between adjacent active substance particles is increased, such that a space may be reserved for the volume expansion of the active substance.

In some embodiments, a thickness of the carbon coating layer is 0.1 nm to 2000 nm. For example, the thickness of the carbon coating layer may be 0.1 nm, 0.5 nm, 1 nm, 30 nm, 60 nm, 100 nm, 150 nm, 200 nm, 300 nm, 500 nm, 800 nm, 1200 nm, 1700 nm, 2000 nm, or any value within a range composed of any two of the above numerical values. The carbon coating layer may reduce the solubility of the anode material, so as to reduce a gas production amount of the reaction between the dissolved active substance (e.g., silicon particle) and the electrolyte solution. By controlling the thickness of the carbon coating layer within the above range, the stability of the particle structures of the anode material during the cyclic process is maintained, such that the active substance exposed from the surface of the anode material may be reduced, and the risk of a large number of SEIs generated during charging and discharging due to the exposed active substance is reduced, thereby improving the specific capacity and electrochemical performance of the anode material.

EP 4 589 680 A2

In some embodiments, a specific surface area of the anode material is 1 m²/g to 10 m²/g. For example, the specific surface area of the anode material may be 1 m²/g, 2 m²/g, 3 m²/g, 4 m²/g, 5 m²/g, 6 m²/g, 7 m²/g, 8 m²/g, 9 m²/g, 10 m²/g, or any value within a range composed of any two of the above numerical values. When the specific surface area of the anode material is large, an SEI membrane on the surface of the anode material consumes excess lithium salts, and a volume effect tends to cause electrical detachment between the particles, resulting in reduction in reversible capacity and coulombic efficiency of a battery. Therefore, the specific surface area of the anode material in this implementation is small, thereby improving the first discharging specific capacity and initial coulombic efficiency of the battery.

In some embodiments, powder conductivity of the anode material is 0.05 S/m to 5 S/m. For example, the powder conductivity of the anode material may be 0.05 S/cm, 0.1 S/cm, 0.3 S/cm, 0.5 S/cm, 1 S/cm, 1.5 S/cm, 2 S/cm, 3 S/cm, 4 S/cm, 5 S/cm, or any value within a range composed of any two of the above numerical values.

In some embodiments, a median particle size $D_V50$ of the anode material is 3 μm to 15 μm. For example, the median particle size $D_V50$ of the anode material may be 3 μm, 4 μm, 6 μm, 8 μm, 10 μm, 12 μm, 14 μm, 15 μm, or any value within a range composed of any two of the above numerical values. By controlling the median particle size of the anode material within the above range, the cycling performance of the anode material is improved. The median particle size $D_V50$ indicates a corresponding particle size when the percentage of cumulative particle size distribution reaches 50%.

In some embodiments, the matrix includes a carbon material. The carbon material includes one or more of artificial graphite, natural graphite, amorphous carbon, activated carbon, mesocarbon microbeads, carbon nanotubes, carbon nanofibers, and graphene. When the matrix is the carbon material, the above material may provide pore distribution sites for the active substance and form a conductive network.

In some other embodiments, the matrix includes a non-carbon material. The non-carbon material includes at least one of a metal oxide, a silicide, a silicate, a phosphate, a titanate, or an aluminum borate salt; the metal oxide includes one or more of aluminum oxide, zirconium oxide, germanium dioxide, and manganese dioxide; the silicide includes one or more of silicon carbide and silicon nitride; the silicate includes one or more of cordierite, mullite, and zeolite; the phosphate includes one or more of aluminum phosphate, magnesium phosphate, calcium phosphate, titanium phosphate, chromic phosphate, cobalt phosphate, nickel phosphate, germanium phosphate, zirconium phosphate, niobium phosphate, molybdenum phosphate, tantalum phosphate, tungsten phosphate, and lanthanum phosphate; and the titanate includes one or more of calcium titanate, iron titanate, lithium titanate, and barium titanate. A transport path of lithium ions is optimized by selecting the above materials as the non-carbon material, such that the diffusion rate and embedding efficiency of the lithium ions are improved, thereby improving electrochemical performance.

In some embodiments, the active substance includes one or more of Si, Li, Na, K, Sn, Ge, Fe, Mg, Ti, Zn, Al, P, and Cu.

In some embodiments, a carbon material of the carbon coating layer includes one or more of amorphous carbon and graphitized carbon. In some embodiments, the carbon coating layer may be a single carbon coating layer formed by the above single materials, or may also be a carbon coating layer formed by combining the above various materials, or may also be a plurality of carbon coating layers formed by the single materials, or may also be the plurality of carbon coating layers formed by the various materials. A layer structure of the carbon coating layer may be selected according to actual requirements. It may be understood that, when the carbon coating layer is of a multi-layer coating structure, the compactness of the carbon coating layer is higher. The carbon coating layer located on the surface of the matrix facilitates the improvement of the stability and conductivity of the matrix. The carbon coating layer may also coat the active substance expose to the surface of the matrix, such that continuous oxidation of the exposed active substance during placement is reduced, and the risk of a reduction in the specific capacity and initial coulombic efficiency (ICE) of the anode material is reduced. The carbon coating layer may also reduce a direct contact between the active substance and the electrolyte solution, so as to improve the stability of the SEI membrane, thereby improving the initial coulombic efficiency of the anode material.

In some embodiments, the matrix of the anode material includes a carbon matrix, the active substance includes a silicon material, and the silicon material includes one or more of elemental silicon, a silicon oxide, and a silicon alloy. When the active substance includes the silicon material, the silicon material serves as a component of an anode active material, such that the specific capacity of the anode material can be increased, thereby increasing an energy density of the secondary battery. The silicon element is selected from any one or more of a complex of crystalline silicon and amorphous silicon, the crystalline silicon, and the amorphous silicon. Preferably, the silicon material includes the amorphous silicon. When the active substance includes the amorphous silicon, the amorphous silicon expands isotropically during a lithium embedding process, such that the collapse of the pores in the anode material may be reduced, and the specific capacity of the anode material is inhibited from rapidly declining, thereby further improving the lithium intercalation cycling performance of the anode material.

In some embodiments, based on the mass of the anode material, a mass proportion of carbon in the anode material is 30% to 70%. For example, the mass proportion of the carbon in the anode material may be 30%, 35%, 40%, 45%, 50%, 55%, 60%, 65%, 70%, or any value within a range composed of any two of the above numerical values. A silicon carbon composite material is obtained by combining the silicon material and a porous carbon material, facilitating the relieving of the volume expansion of the silicon material. The carbon includes the carbon matrix and the carbon coating layer. When the mass proportion of the carbon is within the range, sufficient carbon-based substrates can be established, such that sufficient distribution sites are provided for the active substance, so as to form an effective conductive network, thereby improving the conductivity and cycling stability.

In some embodiments, based on the mass of the anode material, a mass proportion of hydrogen in the anode material is less than or equal to 5%. For example, the mass proportion of the hydrogen in the anode material may be 5%, 4%, 3%, 2%, 1%, 0.5%, 0.1%, or any value within a range composed of any two of the above numerical values. The hydrogen in the anode material is mainly derived from the methyl, methylene, and methine on the carbon coating layer. By controlling the hydrogen within the range, the methyl, methylene, and methine with appropriate contents are formed, such that the chemical stability and reaction activity of the anode material are integrally improved.

In some embodiments, based on the mass of the anode material, a mass proportion of silicon in the anode material is 30% to 80%. For example, the mass proportion of the silicon in the anode material may be 30%, 35%, 40%, 45%, 50%, 55%, 60%, 65%, 70%, 75%, 80%, or any value within a range composed of any two of the above numerical values. When the mass proportion of the silicon within the interval, a lithium battery constituted by the anode material can store a high capacity, that is, a first discharging specific capacity is high.

The anode active material layer further includes a binder, which is used to bond to anode active substance particles, such that a film layer is formed, and a bonding force between the anode material active layer and the anode current collector can also be improved. In some embodiments, the binder may include, but is not limited to, poly(vinyl alcohol), hydroxypropyl cellulose, diacetyl cellulose, polyvinyl chloride, carboxylated polyvinyl chloride, poly(vinyl fluoride), polymer containing ethylene oxide, polyvinylpyrrolidone, polyurethane, poly(tetrafluoroethylene), polyvinylidene fluoride, polyethylene, polypropylene, styrene butadiene rubber, acrylated (ester) styrene butadiene rubber, epoxy resin, nylon, or the like.

The anode active material layer may further include a conductive material. The conductive material includes, but is not limited to, a carbon-based material, a metal-based material, a conductive polymer, or any combination thereof. In some embodiments, the carbon-based material may include, but is not limited to, natural graphite, artificial graphite, carbon black, acetylene black, Ketjen black, carbon fiber, or any combination thereof. In some embodiments, the metal-based material may include, but is not limited to, a metal powder or a metal fiber, for example, copper, nickel, aluminum, or silver. In some embodiments, the conductive polymer may be a polyphenylene derivative.

Separation film

The separation film 103 includes a film layer having a porous structure, and a material thereof includes, but is not limited to, at least one of polyethylene, polypropylene, polyvinylidene fluoride, polyethylene terephthalate, polyimide, or aramid. For example, the separation film 103 may be a polypropylene porous film, a polyethylene porous film, polypropylene non-woven fabric, polyethylene non-woven fabric, a polypropylene-polyethylene-polypropylene porous composite film, or the like.

Electrolyte solution

An electrolyte has the effect of conducting ions between a cathode sheet and an anode sheet. A state of the electrolyte may be one or more of a gel state, a solid state, and a liquid state. In some embodiments, the electrolyte uses an electrolyte solution. The electrolyte solution plays a role in conducting active ions between the cathode sheet and the anode sheet. In some embodiments, the electrolyte solution includes a lithium salt and an organic solvent. The lithium salt may be selected from, but is not limited to, one or more of lithium hexafluorophosphate ($LiPF_6$), lithium tetrafluoroborate ($LiBF_4$), lithium hexafluoroarsenate ($LiAsF_6$), lithium perchlorate ($LiClO_4$), lithium tetraphenylborate ($LiB(C_6H_5)_4$), lithium methanesulfonate ($LiCH_3SO_3$), lithium Bis(fluorosulfonyl)imide (LiFSI), lithium bis(trifluoromethanesulphonyl)imide (LiTFSI), lithium trifluoromethanesulfonate ($LiCF_3SO_3$), lithium bis(trifluoromethanesulphonyl)imide ($LiN(SO_2CF_3)_2$, tri(trifluoromethanesulfonyl)methyl lithium ($LiC(SO_2CF_3)_3$), lithium bis(oxalate)borate (LiBOB), and lithium difluorophosphate ($LiPO_2F_2$). For example, the lithium salt selects the $LiPF_6$, because it may provide high ionic conductivity and improve a cycle characteristic. The organic solvent may be a carbonate compound, a carboxylate compound, an ether compound, a nitrile compound, other organic solvents, or a combination thereof. An example of the carbonate compound includes, but is not limited to, Diethyl Carbonate (DEC), Dimethyl Carbonate (DMC), Dipropyl Carbonate (DPC), Methyl Propyl Carbonate (MPC), Ethyl Propyl Carbonate (EPC), Ethyl Methyl Carbonate (MEC), Ethylene Carbonate (EC), Propylene Carbonate (PC), Butyl Carbonate (BC), Vinyl Ethylene Carbonate (VEC), Fluoroethylene Carbonate (FEC), carbonate-1,2-difluoroethylene ester, carbonate-1,1-difluoroethylene ester, carbonate-1,1,2-trifluoroethylene ester, carbonate-1,1,2,2-tetrafluoroethylene ester, carbonate-1-fluoro-2-methyl ethylene ester, carbonate-1-fluoro-1-methyl ethylene ester, carbonate-1,2-difluoro-1-methyl ethylene ester, carbonate-1,1,2-trifluoro-2-methyl ethylene ester, trifluoromethyl ethyl carbonate, or a combination thereof.

An implementation of the present disclosure further provides a method for preparing the anode material. The preparation method includes the following steps.

At Step I, a matrix is provided, and the matrix has pores.

In some embodiments, providing the matrix includes performing a high temperature treatment, activation, and acid pickling on a matrix precursor, so as to obtain the matrix having the pores. By using a carbon matrix as an example, a high temperature carbonization treatment is performed on a carbon source precursor material to obtain a carbon-based carbonized material, the carbon-based carbonized material is mixed with an active agent, and a porous carbonaceous material, which is the carbon matrix having pores, is obtained through high temperature activation and acid pickling.

In some embodiments, the carbon source precursor includes one or more a biomass-based precursor, a resin-based precursor, a coal-based precursor, a petroleum-based precursor, and a polymer-based precursor. The biomass-based precursor may include one or more of coconut shells, straws, fruit shells, sugar, starch, and bamboo; the resin-based precursor may include one or more of phenolic resin and epoxy resin; the coal-based precursor may include one or more of coal tar pitch, needle coke, and anthracite; the petroleum-based precursor may include one or more of petroleum coke, asphalt, and heavy oil; and the polymer-based precursor may include one or more of polyfurfural, polyimide, polyacrylonitrile, polyvinylenedifluoride, polystyrene, and polyvinyl chloride.

In some embodiments, a carbonization treatment process is performed and maintained in an inert atmosphere, an oxygen content remains less than or equal to 500 ppm, and a pressure inside a furnace chamber for the carbonization treatment remains at 1 torr to 200 torr. An inert atmosphere gas includes one or more of nitrogen, helium, neon, argon, krypton, and xenon. In some embodiments, a temperature for the carbonization treatment is 400°C to 2000°C, preferably 600°C to 1200°C. In some embodiments, a time for the carbonization treatment is 1 h to 48 h, preferably 2 h to 8 h.

In some embodiments, the active agent during activation includes one or more of an alkaline substance active agent, a gas active agent, a salt active agent, an acidic substance active agent. The alkaline substance active agent may include one or more of potassium hydroxide, sodium hydroxide, sodium carbonate, potassium carbonate, calcium oxide, magnesium oxide, triethylamine, tetraethylammonium, pyridine, and imidazole; the gas active agent may include one or more of water vapor, oxygen, and carbon dioxide; the salt active agent may include one or more of zinc chloride, potassium chloride, and sodium chloride; and the acidic substance active agent may include one or more of sulfuric acid, phosphoric acid, and nitric acid.

In some embodiments, a temperature for the activation treatment during activation is 600°C to 1400°C. In some embodiments, a time for the activation treatment during activation is 2 h to 48 h.

At Step II, an active substance is deposited in the matrix to obtain a core body.

In some embodiments, depositing the active substance in the matrix includes placing the matrix in a gas-phase carrier atmosphere of the active substance to cause a gas-phase carrier of the active substance to be subjected to high temperature cracking, so as to deposit the active substance on the matrix. By using the carbon matrix and silicon particles as an example, since the carbon matrix has pores, and the silicon particles may be obtained through the high temperature cracking of a silicon source gas, the carbon matrix is placed in a silicon source gas atmosphere, and through the deposition of the silicon source gas atmosphere at a high temperature, some of the silicon particles may be deposited in the pores of the carbon matrix, so as to obtain a silicon carbon composite material. The silicon source gas may include one or more of monosilane, disilane, hexylsilane, and trisilane. In some embodiments, a concentration of the silicon source gas is 10% to 60%, diluting the silicon source gas with an inert gas or nitrogen, in which the inert gas is selected from one or more of helium, neon, argon, krypton and xenon; and preferably diluting the silicon source gas with nitrogen. In some embodiments, a deposition temperature is 400°C to 700°C, and a deposition time is 1 h to 48 h.

At Step III, the core body and a reaction gas are mixed and subjected to a heat treatment, the reaction gas includes a carbon source gas, hydrogen, and an inert gas, a volume proportion of the hydrogen in the reaction gas is greater than or equal to 5% and less than or equal to 30%, a temperature for the heat treatment is greater than or equal to 500°C and less than or equal to 800°C, a time for the heat treatment is greater than or equal to 2 h and less than or equal to 48 h, and an anode material is obtained. For example, the volume proportion of the hydrogen in the reaction gas may be 5%, 10%, 15%, 20%, 25%, 30%, or any value within a range composed of any two of the above numerical values. The temperature for the heat treatment may be 500°C, 550°C, 600°C, 650°C, 700°C, 750°C, 800°C, or any value within a range composed of any two of the above numerical values. The time for the heat treatment may be 2 h, 6 h, 12 h, 18 h, 24 h, 30 h, 36 h, 42 h, 48 h, or any value within a range composed of any two of the above numerical values.

By using the silicon carbon composite material as an example, by mixing the silicon carbon composite material with the carbon source gas for the heat treatment, the anode material with a carbon coating layer coated on the surface of the carbon matrix or on surfaces of the silicon particles attached to the surface of the carbon matrix, and the carbon coating layer has methyl, methine, and methylene groups. The heat treatment is further performed in a proper amount of a hydrogen atmosphere, and the hydrogen may adjust a concentration of atomic hydrogen or ionic hydrogen in the entire reaction gas, so as to show a hydrogenation process and a dehydrogenation process. A hydrogenation effect may cause active hydrogen atoms or ions and the groups on the surface of the carbon material to undergo an addition reaction, for example, transformation of the methine and methylene to the methyl. At a high temperature, a dehydrogenation effect may lead to gradual removal of the hydrogen atoms from the methyl and transformation to the methine and methylene, and at the same time, the methine and the methylene are also dehydrogenated. By controlling the concentration of the hydrogen within an appropriate range, contents of the methyl, methylene, and methine on the carbon coating layer of the anode material may be adjusted. Therefore, the carbon coating layer is coated on the surface of the carbon matrix, or coated on the surfaces of the silicon particles attached to the surface of the carbon matrix. The stability and hydrophobicity of the anode material are adjusted through a methyl structure, and the reaction activity and conductivity of the anode material are adjusted through a methylene or methine structure, such that the problems of structural instability and poor conductivity of the silicon-carbon composite anode material are improved.

By controlling the volume proportion of the hydrogen, the temperature for the heat treatment, and the time for the heat treatment within the above ranges, the contents of the methyl, methylene, and methine on the carbon coating layer of the anode material obtained can be controlled, such that the anode material with the contents of the methyl, methylene, and methine meeting a preset relational expression and range is obtained. During preparation, when there is a lack of hydrogen in the atmosphere, the methyl in the material is mainly from the cracking of a carbon source, and the overall content is low; and when a proportion of the hydrogen in the provided atmosphere is too small, the hydrogenation process in a reaction system is relatively weak, and a low hydrogen concentration facilitates the breaking of an original thermodynamic equilibrium, more facilitating the occurrence of the dehydrogenation process, thus causing the content of the methyl to be lower. When the proportion of the hydrogen in the provided atmosphere is too large, due to the intense hydrogenation process, the proportion of the methyl in the material is increased. Furthermore, when the temperature for the heat treatment is too low, or the time for the heat treatment is too short, the cracking of the carbon source gas is not sufficient. Since the cracking reaction of the carbon source gas cannot completely be performed to an anticipated phase, generating an intermediate or by-product containing the methyl, these methyl groups are generally derived from an incomplete cracking process of carbon source gas molecules, and reserved in a product under the influence of reaction conditions, thereby leading to an increase in the proportion of the methyl. When the temperature for the heat treatment is too high, the dehydrogenation process is relatively significant, causing the methyl content to reduce. A too high temperature may also cause an internal structure of the carbon material to become too fragile, resulting in a reduction in stability.

In some embodiments, a volume proportion of the carbon source gas in the reaction gas is greater than or equal to 10% and less than or equal to 50%, and a volume proportion of the inert gas or nitrogen in the reaction gas is greater than or equal to 20% and less than or equal to 85%.

In some embodiments, the carbon source gas includes one or more of methane, acetylene, ethylene, ethane, propane, propylene, benzene, toluene, xylene, ethanol, cyclohexane, methanol, and acetone.

In some embodiments, the inert gas includes one or more of helium, neon, argon, and krypton.

The solutions of the present disclosure are described below with reference to embodiments. It will be understood by those skilled in the art that the following examples are intended only to explain the present disclosure and are not to be construed as a limitation of the present disclosure. Unless otherwise disclosed, the reagents, software, and instruments involved in the following embodiments that are not specifically disclosed are either conventional commercially available products or open sources.

Embodiment 1:

This embodiment provided an anode material, and a lithium ion battery based on the anode material.

(1) A method for preparing the anode material included the following steps.

At S1, a certain amount of fruit shells was placed in a carbonization furnace, and carbonization was performed for 8 h at 900°C, so as to obtain a carbon-based carbonized material.

At S2, the carbon-based carbonized material obtained in S1 was placed in a mixed atmosphere of 15% of water vapor and 85% of nitrogen for an activation treatment, an activation temperature was 900°C, an activation time was 24 h, the activated material was subjected to ultrasonic agitation in a 40% hydrochloric acid aqueous solution, subjected to vacuum filtration, and washed with pure water until the pH is neutral, and a carbon substrate having pores was obtained after drying was completed.

At S3, the carbon substrate having pores obtained in S2 was transferred to a CVD device, a silane concentration was maintained at 25%, i. e. the ratio of silane to nitrogen entering the CVD device being 1:3, a reaction temperature was 550°C, a reaction time was 10 h, and a silicon carbon composite material was obtained.

At S4, the silicon carbon composite material obtained in S3 was placed in a reaction furnace, a reaction gas in which nitrogen:acetylene:hydrogen=70%:15%:15% was introduced for a heat treatment, a temperature was 700°C, a time was 4 h, and the obtained material was sieved and graded to obtain an anode material.

(2) A method for preparing the lithium ion battery based on the anode material included the following operations.

The anode material, conductive carbon black, and carboxymethyl cellulose were completely stirred in a mixed solution of deionized water and anhydrous ethanol according to a mass ratio of 7:2:1, and were uniformly coated on copper foil; the copper foil was dried in a vacuum at 100°C, and was cut into a circular electrode plate; then a lithium metal was used as a counter electrode; a button battery was assembled in a glove box and tested; and a diaphragm used was Celgard C2400, an electrolyte solution was a 1.0 M $LiPF_6$ EC, PC, and DEC solution (a volume ratio being EC:PC:DEC=3:1:6).

Embodiment 2:

A difference between this embodiment and Embodiment 1 lied in that, in S4, a composition of the reaction gas was adjusted to nitrogen:acetylene:hydrogen=50%:40%:10%.

Embodiment 3:

A difference between this embodiment and Embodiment 1 lied in that, in S4, a composition of the reaction gas was adjusted to nitrogen:acetylene:hydrogen=50%:20%:30%.

Embodiment 4:

A difference between this embodiment and Embodiment 1 lied in that, in S4, the temperature for the heat treatment was adjusted to 600°C.

Embodiment 5:

A difference between this embodiment and Embodiment 1 lied in that, in S4, the time for the heat treatment was adjusted to 8 h.

Embodiment 6:

A difference between this embodiment and Embodiment 1 lied in that, in S4, a composition of the reaction gas was adjusted to nitrogen:propane:hydrogen=70%:15%:15%.

Embodiment 7:

A difference between this embodiment and Embodiment 1 lied in that, in S4, a composition of the reaction gas was adjusted to nitrogen:cyclohexane:hydrogen=70%:15%:15%, and the cyclohexane in the mixed gas was introduced in a reactor through an external bubbling apparatus; and the time for the heat treatment was adjusted to 8 h.

Embodiment 8:

A difference between this embodiment and Embodiment 1 lied in that, in S4, a composition of the reaction gas was adjusted to nitrogen:acetylene:hydrogen=85%:10%:5%.

Embodiment 9:

A difference between this embodiment and Embodiment 1 lied in that, in S4, a composition of the reaction gas was adjusted to nitrogen:acetylene:hydrogen=30%:40%:30%.

Comparative embodiment 1:

A difference between this embodiment and Embodiment 1 lied in that, in S4, a composition of the reaction gas was adjusted to nitrogen:acetylene=75%:25%.

Comparative embodiment 2:

A difference between this embodiment and Embodiment 1 lied in that, in S4, a composition of the reaction gas was adjusted to nitrogen:acetylene:hydrogen=25%:25%:50%.

Comparative embodiment 3:

A difference between this embodiment and Embodiment 1 lied in that, in S4, a composition of the reaction gas was adjusted to nitrogen:acetylene:hydrogen=50%:25%:25%, and the temperature for the heat treatment was adjusted to 400°C.

Comparative embodiment 4:

A difference between this embodiment and Embodiment 1 lied in that, in S4, a composition of the reaction gas was adjusted to nitrogen:acetylene:hydrogen=50%:25%:25%, and the time for the heat treatment was adjusted to 1 h.

A performance test was performed on the anode material obtained in the Embodiments 1-9 and Comparative embodiments 1-4. A test method was as follows.

Methods for testing total pore volumes and proportions of the matrix and total pore volumes and proportions of the anode material with the active substance removed: the pore volume of the matrix referred to a total capacity of pores owned by the matrix per unit mass, and the total pore volume of the matrix might be measured through gas adsorption measurement. Nitrogen adsorption was a technology for characterizing the porosity and pore size distribution of a material by condensing a gas in the aperture gaps of a solid. As the pressure increases, the gas was first condensed in the aperture gaps with minimum diameters, and the pressure increases until reaching a saturation point, and all the aperture gaps at the saturation point were filled with liquid. Then, a nitrogen pressure gradually reduced to evaporate the liquid from a system. Analysis of adsorption and desorption isotherms could determine the pore volume and pore size distribution, as well as the proportions of the respective pore volumes of the micropores, mesopores, and macropores in the total pore volume. A manner of removing the active substance from the anode material (by using a silicon material as an example): concentrated nitric acid with a concentration of 1 M was added in the anode material for soaking for 4 h; then an HF acid solution with a 20% mass fraction was added dropwise to the anode material, yellow smoke was produced, and the acid solution was repeated added dropwise for a plurality of times, until there was no yellow smoke produced in the solution; and finally, the concentrated nitric acid with the concentration of 1 M was used again to eliminate residue, and then washing and drying were performed to obtain the anode material with the active substance removed.

A method for testing a median particle size of the anode material: a particle size distribution range of the anode material was tested through a Malvern laser particle size analyzer (Mastersizer 3000), volume-based cumulative particle size distribution determined by particle size distribution was measured by using a laser diffraction method, $D_V10$ indicated a corresponding particle size when percentage of cumulative particle size distribution of powder reached 10%; $D_V50$ indicated a corresponding particle size when the percentage of cumulative particle size distribution reached 50%; and $D_V90$ indicated a corresponding particle size when the percentage of cumulative particle size distribution reached 90%.

Thickness of a carbon coating layer: a section treatment was performed on the material by using an FIB-SEM device, 10 particles were randomly taken in the SEM, each particle was measured for 3 times for the thickness of the carbon coating layer, and measurement was performed to obtain an average thickness of the carbon coating layer.

Testing for powder conductivity: a method for volume resistivity of a sample was determined by using a four-probe method. The conductivity of a powder at five pressure points of 4 KN, 8 KN, 12 KN, 16 KN, 20 KN may be determined by using an MCP-PD51 powder conductivity meter of Mitsubishi Chemical, and then the resistivity of the powder was automatically calculated by a computer.

A method for testing a mass content of carbon: a G4 ICARUS HF infrared carbon sulfur analyzer from Bruker was used; a sample was burned at a high temperature in an oxygen-enriched state, and carbon contained was oxidized into carbon dioxide; the generated gases entered an infrared detector with a carrier gas; and quantitative statistics was performed on changes in a carbon dioxide signal, and the content of the carbon might be calculated.

A method for testing a mass content of silicon: an SA2-9-17TP box-type atmosphere furnace from Nanyang Xinyu Furnaces Co., Ltd. was used, burning was performed in an oxygen atmosphere, the silicon in the sample reacted to become silica, the carbon was burned and discharged as the carbon dioxide, and a silicon content was calculated through weighing.

A method for testing a mass content of hydrogen: an ONH 2000 oxygen, nitrogen and hydrogen elemental analyzer from VERDER was used. A method for detecting a mass proportion of the hydrogen of the anode material included: the anode material and a fluxing agent (nickel) were heated and melted in a graphite crucible in a pulse electrode furnace in an inert gas (He or Ar), and the hydrogen was released; and the hydrogen passed through rare earth copper oxide, water vapor was generated, an electrical signal of water was outputted through a water infrared detector, and the content of the hydrogen was obtained by comparing with an electrical signal of a known hydrogen standard substance/- sample.

A method for testing a specific surface area: a TriStar3000&3020 specific surface area and pore diameter analyzer from Micromeritics, USA was used, and a specific surface area of a powder sample was tested by using a gas adsorption method (nitrogen adsorption multi-point BET) at a low temperature controlled by liquid nitrogen cooling.

A method for testing an average particle size of material particles:
Material particles were observed by a field emission scanning electron microscopy or a transmission electron microscope, the particle sizes of 5-10 material particles were directly measured by a scale, and an average value of the particle sizes was taken as the average particle size of the final material particles.

In the present disclosure, a method for testing a gas production amount was performed on the anode material obtained in Embodiments 1-9 and Comparative embodiments 1-4. (1) 5 g of the anode material was filled in a closed container, deionized water was added to the container, and the remaining volume at the top was 60 mL; (2) the container was sealed, well mixed, and stored for one day at room temperature; (3) after 24 h, the container was fully well shaken again to cause precipitate to disperse in the liquid; and (4) a lid of the container was opened, and a concentration of the hydrogen was detected by using a hydrogen gas detector and converted into cc/(kg·day).

A method for testing areas $S_1$, $S_2$, and $S_3$ of stretching vibration peaks of the anode material was referred to records in the specification, and thus was not described herein again.

In the present disclosure, an electrochemical performance test was performed on the lithium ion battery obtained in Embodiments 1-9 and Comparative embodiments 1-4, and mainly included: a blue lightning CT2001A battery testing system was used, initial coulombic efficiency was tested according to the test method of silicon carbon national standard GB/T38823-2020, a capacity retention rate was tested according to the test method of national standard GB/T36276-2018, and expansion rates of anode sheets in these lithium ion batteries were tested after 50 cycles of charging and discharging. A method for calculating the expansion rate included: the electrode plate was observed by using a scanning electron microscope, and an average particle size of the silicon particles before lithium embedding was obtained as $D_1$ according to a corresponding scale; the button battery was dismantled after charging and discharging cycles, the electrode plate was washed with DEC and observed with the scanning electron microscope, and an average particle size of the silicon particles after lithium embedding was obtained as $D_2$ according to a corresponding scale; and the silicon particles were regarded as spherical-like structures, and the expansion rate was $D_2/D_1-1$.

In the present disclosure, some of the preparation conditions in Embodiments 1-9 and Comparative embodiments 1-4 were referred to Table 1, and the test results were referred to Table 2.

Table 1 Some of preparation conditions in Embodiments 1-9 and Comparative embodiments 1-4 of the present disclosure

| Serial Number | Composition of reaction gas | Heat treatment temperature/°C | Heat treatment time/h |
|---|---|---|---|
| Embodiment 1 | Nitrogen:acetylene:hydrogen=70%:15%:15% | 700 | 4 |
| Embodiment 2 | Nitrogen:acetylene:hydrogen=50%:40%:10% | 700 | 4 |
| Embodiment 3 | Nitrogen:acetylene:hydrogen=50%:20%:30% | 700 | 4 |
| Embodiment 4 | Nitrogen:acetylene:hydrogen=70%:15%:15% | 600 | 4 |
| Embodiment 5 | Nitrogen:acetylene:hydrogen=70%:15%:15% | 700 | 8 |
| Embodiment 6 | Nitrogen:propane:hydrogen=70%:15%:15% | 700 | 4 |
| Embodiment 7 | Nitrogen:cyclohexane:hydrogen=70%: 15%: 15% | 700 | 8 |
| Embodiment 8 | Nitrogen:acetylene:hydrogen=85%:10%:5% | 700 | 4 |
| Embodiment 9 | Nitrogen:acetylene:hydrogen=30%:40%:30% | 700 | 4 |
| Comparative embodiment 1 | Nitrogen:acetylene=75%:25% | 700 | 4 |
| Comparative embodiment 2 | Nitrogen:acetylene:hydrogen=25%:25%:50% | 700 | 4 |
| Comparative embodiment 3 | Nitrogen:acetylene:hydrogen=50%:25%:25% | 400 | 4 |
| Comparative embodiment 4 | Nitrogen:acetylene:hydrogen=50%:25%:25% | 700 | 1 |

Table 2 Test results for anode material and lithium ion battery in Embodiments 1-9 and Comparative embodiments 1-4 of the present disclosure

| Serial Number | Hydrogen content (wt%) | Specific surface area (m²/g) | Conductivity (S/cm) | Capacity (mAh/g) | Initial coulombic efficiency (%) | $3S_3/(S_1+2S_2+3S_3)$ | Expansion rate of 50 cycles | Gas production amount (cc/kg/day) |
|---|---|---|---|---|---|---|---|---|
| Embodiment 1 | 0.36 | 1.8 | 1.4 | 1922.1 | 91.5 | 0.30 | 37.2 | 0.5 |
| Embodiment 2 | 0.30 | 2.1 | 1.2 | 1922.5 | 90.0 | 0.31 | 38.6 | 0.8 |
| Embodiment 3 | 0.45 | 2.6 | 1.6 | 1923.6 | 90.9 | 0.29 | 38.2 | 0.6 |
| Embodiment 4 | 0.34 | 1.9 | 1.8 | 1921.5 | 91.6 | 0.26 | 39.5 | 1.0 |
| Embodiment 5 | 0.38 | 2.2 | 1.5 | 1923.0 | 90.5 | 0.29 | 40.5 | 0.9 |
| Embodiment 6 | 0.39 | 2.4 | 1.6 | 1932.1 | 90.1 | 0.28 | 39.6 | 1.1 |
| Embodiment 7 | 0.42 | 2.0 | 1.3 | 1915.1 | 91.2 | 0.37 | 39.5 | 0.8 |
| Embodiment 8 | 0.27 | 2.3 | 1.6 | 1922.3 | 90.6 | 0.11 | 41.2 | 1.2 |
| Embodiment 9 | 0.58 | 2.6 | 0.8 | 1905.8 | 90.4 | 0.49 | 36.8 | 0.9 |
| Comparative embodiment 1 | 0.33 | 3.9 | 1.1 | 1702.5 | 88.5 | 0.08 | 52.9 | 5.5 |
| Comparative embodiment 2 | 0.65 | 6.2 | 0.2 | 1500.8 | 85.2 | 0.62 | 45.5 | 3.9 |
| Comparative embodiment 3 | 0.33 | 4.6 | 0.5 | 1616.8 | 86.9 | 0.55 | 49.9 | 4.8 |
| Comparative embodiment 4 | 0.37 | 5.2 | 0.4 | 1695.2 | 86.0 | 0.51 | 56.1 | 5.0 |

The anode material of Embodiments 1-9 of the present disclosure met $0.1 \leq \frac{3S_3}{S_1+2S_2+3S_3} \leq 0.5$, had relatively lower specific surface area and gas production amount, and was small in expansion degree during charging and discharging cycles. The carbon coating layers in these anode materials were provided with the methyl, methylene, and methine with the proper contents, facilitating improvement of the stability and conductivity of the carbon matrix and reduction of the gas production amount of the silicon particles and the side reactions with the electrolyte solution, such that the lithium ion battery of Embodiments 1-9 had higher capacity and initial coulombic efficiency, and had good cycling stability during charging and discharging cycles.

Compared to Embodiment 1:

In Comparative embodiment 1, when carbon coating was performed, there was a lack of hydrogen in the mixed gas, the methyl in the coating layer was mainly derived from the cracking of the carbon source, and the overall content was relatively low, thereby leading to the anode material $\frac{3S_3}{S_1+2S_2+3S_3} < 0.1$ . In the carbon coating layer, the content of the methyl was too low, affecting the chemical stability of the obtained anode material, the gas production amount of the silicon particles significantly increased, and the expansion degree of the electrode plate during the charging and discharging cycles also significantly increased, affecting the electrochemical performance of the obtained lithium ion battery.

In Comparative embodiment 2, since the mixed gas contained excessive hydrogen when **carbon coating** was performed, the hydrogenation effect of the hydrogen dominated the coating process, leading to the transformation of excessive methine and methylene to the methyl, resulting in excessive methyl formed on the carbon coating layer, and the contents of the methylene and methine were relatively insufficient, $\frac{3S_3}{S_1+2S_2+3S_3} > 0.5$ , the reaction activity of the groups was reduced, electronic transport paths were relatively reduced, resulting in a reduction in the conductive performance of the anode material, affecting the electron conductivity of the obtained lithium ion battery, and thus leading to a significant reduction in the capacity and initial coulombic efficiency of a battery prepared by the anode material.

In Comparative embodiment 3 and Comparative embodiment 4, since the temperature and time for the heat treatment were insufficient when carbon coating was performed, the cracking of the carbon source gas was insufficient. Since the cracking reaction of the carbon source gas could not be completely performed to an anticipated phase, an intermediate or by-product containing the methyl was generated and reserved in a product under the influence of the reaction conditions, causing a methyl proportion in the obtained coating layer to increase, resulting in $\frac{3S_3}{S_1+2S_2+3S_3} > 0.5$ , such that the reaction activity of the groups was reduced, the electronic transport paths were relatively reduced, resulting in a reduction in the conductive performance of the anode material, affecting the electron conductivity of the obtained lithium ion battery, and thus leading to a reduction in capacity and initial coulombic efficiency.

The results showed that, the carbon coating layer of the anode material included the methyl, the methylene, and the methine. The areas $S_3$, $S_2$, $S_1$ of the stretching vibration peaks of the methyl, methylene, and methine on the carbon coating layer of the anode material were quantitatively analyzed through the infrared spectroscopic analysis testing, and met $0.1 \le \frac{3S_3}{S_1+2S_2+3S_3} \le 0.5$ , such that the structure stability and hydrophobicity of the methyl provided were achieved, and the reaction activity of the methylene or methine was achieved, thereby integrally improving the chemical stability and conductivity of the obtained anode material, and improving the capacity and initial coulombic efficiency of the obtained secondary battery. Therefore, the problems in the related art of an unstable matrix of an anode material, the affected cycling stability and conductivity of a battery due to the exposure of an active substance to a surface of the matrix were improved.

**Claims**

1. An anode material, comprising a core body and a carbon coating layer coating at least partial surface of the core body; the core body comprises a matrix and an active substance; the matrix has pores, and at least partial active substance is provided in the pores of the matrix; the anode material is tested through infrared spectroscopic analysis; an area of a stretching vibration peak at a wave number of $2896 \pm 10$ cm$^{-1}$ is $S_1$; a sum of areas of stretching vibration peaks at wave numbers of $2924 \pm 10$ cm$^{-1}$ and $2853 \pm 10$ cm$^{-1}$ is $S_2$; an area of a stretching vibration peak at a wave number of $2960 \pm 10$ cm$^{-1}$ is $S_3$; and the $S_1$, the $S_2$, and the $S_3$ meet: $0.1 \le \frac{3S_3}{S_1+2S_2+3S_3} \le 0.5$.

2. The anode material according to claim 1, where the matrix meets at least one of the following conditions:

   a specific surface area of the matrix is 500 m$^2$/g to 2000 m$^2$/g;
   a total pore volume of the matrix is 0.5 cm$^3$/g to 2.0 cm$^3$/g;
   an average pore diameter of the matrix is 0.1 nm to 8 nm.

3. The anode material according to claim 1, where the anode material meets at least one of the following conditions:

   an average particle size of the active substance is 0.1 nm to 100 nm;
   a thickness of the carbon coating layer is 0.1 nm to 2000 nm.

4. The anode material according to claim 1, where the anode material meets following condition:
   a specific surface area of the anode material is 1 m$^2$/g to 10 m$^2$/g.

5. The anode material according to claim 1, where the anode material meets the following condition: powder conductivity of the anode material is 0.05 S/m to 5 S/m.

6. The anode material according to claim 1, where the anode material meets the following condition: a median particle size $D_V50$ of the anode material is 3 $\mu$m to 15 $\mu$m.

7. The anode material according to claim 1, wherein the matrix comprises one or both of a carbon material and a non-carbon material;

the carbon material comprises one or more of artificial graphite, natural graphite, amorphous carbon, activated carbon, mesocarbon microbeads, carbon nanotubes, carbon nanofibers, and graphene;
the non-carbon material comprises at least one of a metal oxide, a silicide, a silicate, a phosphate, a titanate, and an aluminum borate salt; the metal oxide comprises one or more of aluminum oxide, zirconium oxide, germanium dioxide, and manganese dioxide; the silicide comprises one or more of silicon carbide and silicon nitride; the silicate comprises one or more of cordierite, mullite, and zeolite; the phosphate comprises one or more of aluminum phosphate, magnesium phosphate, calcium phosphate, titanium phosphate, chromic phosphate, cobalt phosphate, nickel phosphate, germanium phosphate, zirconium phosphate, niobium phosphate, molybdenum phosphate, tantalum phosphate, tungsten phosphate, and lanthanum phosphate; and the titanate comprises one or more of calcium titanate, iron titanate, lithium titanate, and barium titanate.

8. The anode material according to claim 1, wherein the active substance comprises one or more of Si, Li, Na, K, Sn, Ge, Fe, Mg, Ti, Zn, Al, P, and Cu.

9. The anode material according to claim 1, wherein a carbon material of the carbon coating layer comprises one or more of amorphous carbon and graphitized carbon.

10. The anode material according to claim 1, where based on the mass of the anode material, a mass proportion of hydrogen in the anode material is less than or equal to 5%.

11. The anode material according to claim 1, where the active substance comprises a silicon material, based on the mass of the anode material, a mass proportion of silicon in the anode material is 30% to 80%.

12. The anode material according to claim 1, where the matrix comprises a carbon matrix, based on the mass of the anode material, a mass proportion of carbon in the anode material is 30% to 70%.

13. The anode material according to claim 1, wherein the matrix comprises a carbon matrix, the active substance comprises a silicon material, the silicon material comprises one or more of elemental silicon, a silicon oxide, and a silicon alloy, and the anode material further meets the following conditions:

based on the mass of the anode material, a mass proportion of carbon in the anode material is 30% to 70%;
based on the mass of the anode material, a mass proportion of hydrogen in the anode material is less than or equal to 5%;
based on the mass of the anode material, a mass proportion of silicon in the anode material is 30% to 80%.

14. An anode sheet, comprising an anode current collector and an anode active material layer disposed on the anode current collector, wherein the anode active material layer comprises the anode material according to any one of claims 1 to 8.

15. A secondary battery, comprising the anode sheet according to claim 14.

FIG.1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB T388232020 A

- GB T362762018 A